# EUROPEAN PATENT SPECIFICATION

(11) **EP 1 601 172 B1**
(45) Date of publication and mention of the grant of the patent: **03.10.2007**
(21) Application number: 05013149.9
(22) Date of filing: 29.12.1998
(51) Int. Cl.: G06F 3/033, H04M 1/72

(54) **Mobile communication terminal with touch pad**
Mobiles Kommunikationsendgerät mit Berührungseingabefeld
Terminal mobile de communication avec écran tactile

(30) Priority: 29.12.1997 KR 7593797; 10.06.1998 KR 9821521; 28.05.1998 KR 1953198; 15.05.1998 KR 806898
(43) Date of publication of application: 30.11.2005
(62) Divisional of application: 98124788.5
(73) Proprietor: SAMSUNG ELECTRONICS CO., LTD., Suwon 442-742, Gyeonggi-do (KR)
(72) Inventor: Shin, Jang-Ki, Suwon-shi Kyonggi-do (KR); Lee, Kyu-Don, Songpa-gu Seoul (KR); Park, Joung-Kyou, Songpa-gu Seoul (KR); Lee, Jeong-Goo, Kihung-up Yongin-shi Kyonggi-do (KR)
(74) Representative: Grünecker, Kinkeldey, Stockmair & Schwanhäusser Anwaltssozietät

(56) References cited:
- EP-A- 0 721 273
- DE-A1- 4 328 807
- US-A- 5 027 394
- PATENT ABSTRACTS OF JAPAN vol. 016, no. 396 (P-1407), 21 August 1992 (1992-08-21) & JP 04 130517 A (SONY CORP), 1 May 1992 (1992-05-01)
- PATENT ABSTRACTS OF JAPAN vol. 017, no. 069 (E-1318), 10 February 1993 (1993-02-10) & JP 04 273639 A (TOSHIBA CORP), 29 September 1992 (1992-09-29)

## Description

The present invention relates to a user's interface of a digital communication system, and more particularly to a character-recognition system for inputting character data through a touch panel in a digital mobile communication terminal and a method thereof.

As the size of a mobile communication terminal becomes smaller and smaller to increase its portability, it also causes inconveniences for the user to operate the user's interface such as keypad to use a variety of functions provided therein. Moreover, since the mobile communication terminal is recently provided with character data communication service together with the original voice communication service, it requires an additional user's interface for inputting and outputting character data. Presently, the existing key pad consisting of a limited number of numeral and functional keys provided in the communication terminal is designed to serve as the interface to input character data in addition to the essential dialing function. However, in order to input data to represent a variety of characters to the mobile communication terminal, the limited number of the keys should be properly combined to generate desired characters, thus increasing the number of key input operations. To transmit character data through such a conventional mobile communication terminal is carried out by the following three ways.

The first way is to transmit a message as presently composed by making a proper combination of key inputs through several key input operations. The second is to transmit a message previously composed and stored. For example, one of the messages stored in a memory is retrieved for transmission. The third is to make a proper combination of characters displayed on LCD by operating a specially designed key added to the key pad. The first and third ways make it possible to transmit a message as presently composed, but require too many key input operations. On the contrary, the second way does not require many key input operations because of selecting one of the stored messages, but limited to their predetermined contents.

EP 0 721 273 A2 refers to quick dialing in personal mobile phone. Telephone numbers along with alphanumerical identifications representing the same are stored in a memory of a mobile phone. The number is selected with quick dialing so that the user first scrolls the identification corresponding to the required number on the display. The display is a touch-sensitive display. For each identification, several alternative telephone numbers are stored in the quick dialing memory, for instance work, home, or mobile phone. The desired number is selected and a call initiated by writing a gesture corresponding to the required number on the display or in a specified field of the display.

It is an object of the present invention to provide an improved mobile communication terminal with a touch panel as a character input unit.

This object is solved by the present invention and in particular by the subject matter of independent claim 1. Preferred embodiments are subject matter of the dependent claims.

Furthermore, it is an aspect of the present invention to provide a mobile communication terminal with a character-recognition system for facilitating the input of character data, and a method thereof.

It is still another aspect of the present invention to provide a mobile communication terminal with a touch pad adapted for the users familiarized with the conventional key pad.

It is still another aspect of the present invention to provide a mobile communication terminal with a touch panel interface without substantially increasing the size and structural complexity thereof.

It is still another aspect of the present invention to provide a mobile communication terminal with a character-recognition system to utilize its inherent characteristics together with the modem chip.

It is still another aspect of the present invention to provide a mobile communication terminal with a touch panel controlled by suitably utilizing the limited number of the chip selection terminals of the modem chip without substantially modifying the internal structure ofthe mobile communication terminal.

It is a further aspect of the present invention to provide a mobile communication terminal with a touch panel mounted on the LCD module of its housing.

According to one aspect of the present invention, a character-recognition system provided in a digital mobile communication terminal, comprises a display, a touch panel for generating pressure signals in response to the pressures applied by the characters written on its surface, a touch panel drive for generating coordinate data and touch panel state data calculated from the pressure signals, a character data base for storing character data consisting of coordinate data and stroke data of the characters, a character-recognition circnitfor generating the addresses ofthe precise character data retrieved from the character data base by recognizing the data of the written characters, a character code storage for storing the character codes corresponding to the character data stored in the character data base, and a controller for delivering the stroke data of the written characters calculated from the coordinate data and touch panel state data to the character-recognition circuit, wherein the controller retrieves the character codes from the character code storage corresponding to the addresses generated by the character-recognition circuit in response to the coordinate data and stroke data, and display them on the display.

According to anther aspect ofthe present invention, amobile communication terminal including a display, touch panel, character data base for storing character data, and character code storage for storing the character codes corresponding to the character data stored in the character data base, is provided wish a character-recognition method, which comprises the steps of determining whether a character is inputted within a predetermined time interval in character-recognition mode set by an externally input signal, comparing the character data inputted within the predetermined time with the character data stored in the character data base, determining whether the character data base has the character data matching the character data inputted in a given error range, and display the inputted character on the display by reading from the character code storage the character code corresponding to the matching character data.

According to still another aspect of the present invention, a character-recognition system provided in a mobile communication terminal, comprises a modem chip, a touch panel for generating X/Y coordinate data representing a pressure trace made by a pen writing on it, and a touch panel driver having a chip selection input terminal for receiving a chip selection signal generated from a chip selection output terminal of the modem chip, an X/Y selection terminal for receiving an X/Y selection signal generated from a first general-purpose output terminal of the modem chip and a data transfer terminal for receiving the X/Y selection signal and transferring the X/Y coordinate data through the same data bus from and to the modem chip.

According to a further aspect of the present invention, a display module interface for a character-recognition mobile communication terminal, comprises a modem chip, a display selection circuit for converting the output signal of a general-purpose write output terminal provided in the modem chip into a display enable signal, and a display module having an enable terminal for receiving the enable signal, a command/display data input terminal for receiving a command/display data selection signal generated from a general-purpose input/output terminal of the modem chip, and a data bus terminal for receiving command/display data through the same data bus in response to the command/display data selection signal.

The present invention will now be described more specifically with reference to the drawings attached only by way of example.
Fig. 1 is a block diagram for illustrating the structure of a mobile communication terminal provided with a character-recognition system according to the present invention;
Fig. 2 is a flow chart for illustrating the steps of a character-recognition method in a mobile communication terminal according to the present invention;
Fig. 3 is a block diagram for illustrating the internal structure of a CDMA digital cellular phone provided with a character-recognition system;
Fig. 4A is a block diagram for illustrating the structure of a character-recognition system provided in a mobile communication terminal according to an embodiment of the present invention;
Fig. 4B is a flow chart for illustrating the steps of the touch panel interfacing in a character-recognition system as shown in Fig. 4A;
Fig. 5A is a block diagram for illustrating the structure of a character-recognition system provided in a mobile communication terminal according to a second embodiment of the present invention;
Fig. 5B is a flow chart for illustrating the steps of the touch panel interfacing in a character-recognition system as shown in Fig. 5A;
Fig. 6 is a block diagram for illustrating the structure of a character-recognition system provided in a mobile communication terminal according to a third embodiment of the present invention;
Fig. 7 is a block diagram for illustrating the structure of a character-recognition system provided in a mobile communication terminal according to a fourth embodiment of the present invention;
Fig. 8 is a block diagram for illustrating the structure of a character-recognition system provided in a mobile communication terminal according to a fifth embodiment of the present invention;
Fig. 9 is a block diagram for illustrating the structure of a character-recognition system provided in a mobile communication terminal according to a sixth embodiment of the present invention;
Fig. 10 is a perspective view for illustrating a flip-type mobile phone provided with the character-recognition system with the flip cover detached from the housing ;
Fig. 11 is a perspective view for illustrating a touch panel being attached to the housing of a mobile communication terminal according to the present invention;
Fig. 12 is a cross sectional view for illustrating the relationship between various circuit boards and a touch panel installed in the housing of a mobile communication terminal according to the present invention;
Fig. 13 is a perspective view for illustrating a touch panel electrically connected to a main circuit board mounted in the housing of a mobile communication terminal according to the present invention; and
Fig. 14 is a perspective view for illustrating a touch panel being attached to the housing of a bar-type mobile communication terminal according to the present invention.

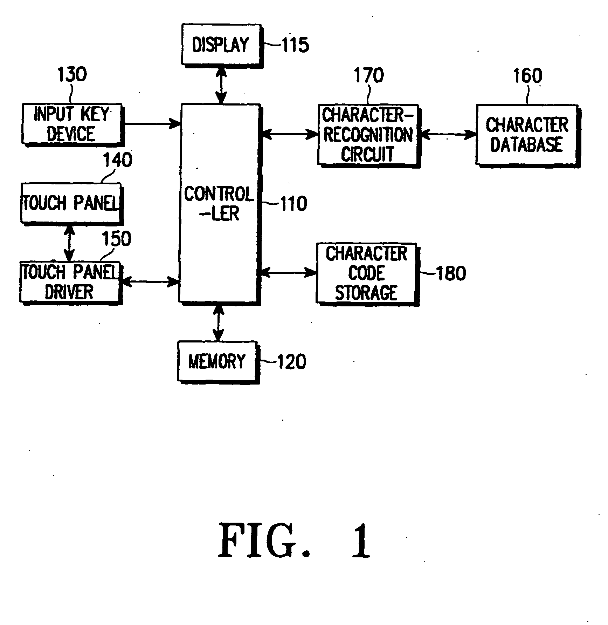

Throughout the attached drawing are used same reference numerals to represent corresponding functional units. Referring to Fig. 1, there is shown a controller 110, which consists of one chip microprocessor to control the overall functions of a mobile communication terminal provided with the character-recognition system. The operational program of the mobile communication terminal and the data generated in the course of executing it are stored into a memory 120. An input key device 13 0 includes a plurality of numeral and functional keys used for externally inputting data. A display 115 displays the key data generated by the input key device 130 as well as various icons and characters to represent desired information. Inputting of character data is achieved by means of a touch panel 140, which converts pressures applied thereto to electrical signals. A touch panel driver 150 calculates coordinate data from the pressure signals, and a touch panel state data to indicate whether the touch panel 140 is applied with pressures to input character data or no. The controller 110 calculates the number of the strokes of the inputted character in response to the touch panel state signal, generating the coordinate data and touch panel state data. A character data base 160 stores the coordinate data of each character and touch panel state data. A character code storage 180 stores the character codes for the character data stored in the character data base. A character-recognition circuit 170 recognizes a character by comparing the coordinate data and touch panel state data with the character data stored in the character data base 160. Receiving the address where the character code for the recognized character data is stored, the controller 110 reads the character code from the character code storage 180 to display the character on the display 15.

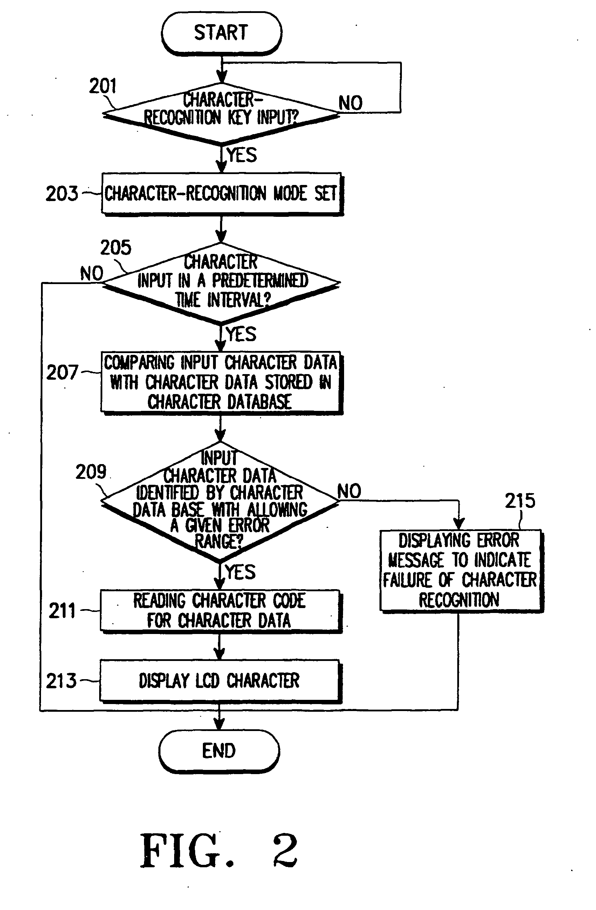

Describing the steps of the character-recognition process with reference to Fig. 2, the controller 110 detects a key signal representing character-recognition mode in step 201. Detecting the key signal, the controller 110 proceeds to step 203 to set the mobile communication terminal to character-recognition mode. Then, in step 205, the controller 110 detects a character input applied through the touch panel driver 150 from the touch panel 140 in a predetermined time interval. Detecting the character input, the process goes to step 207 , where the character-recognition circuit 170 compares the character data received from the touch panel driver 150 with the character data stored in the character data base 160. However, not detecting the character input in step 205, the character-recognition mode is terminated. If the character-recognition circuit 170 detects the input character data identified by the character data base with allowing a given error range in step 209, the controller 110 receives the address of the character code for the precise character data from the character data base 160 by controlling the character-recognition circuit 170 in step 211. Thereafter, the controller 110 reads from the character code storage 180 the character code of the address displayed on the display 115 in step 213 . However, not identifying the character data in step 209, the controller 110 goes to step 215 to display error message to indicate failure of the character-recognition on the display 115.

As a means for inputting characters by hand writing to the mobile communication terminal, the touch panel requires to interface the CPU of the mobile communication terminal or an additional touch panel drive CPU by means of serial connection, or of parallel connection using address or data bus of the CPU. In addition, the interfacing operation may be achieved by polling to periodically read the data generated by the touch panel, or by detecting an interrupt signal from the touch panel to read the data. However, this requires an additional control means because the CPU of the mobile communication terminal does not have a capacity enough to process the additional data generated by the touch panel. For example, the touch panel interfacing through the serial means is hardly achieved at data transmission speed of 19600bps by the CPU already charged with a number of inherent tasks. On the other hand, the parallel means requires additional circuits to address the touch panel, increasing the size and power consumption of the mobile communication terminal. Such problems may be resolved by the system as follows:

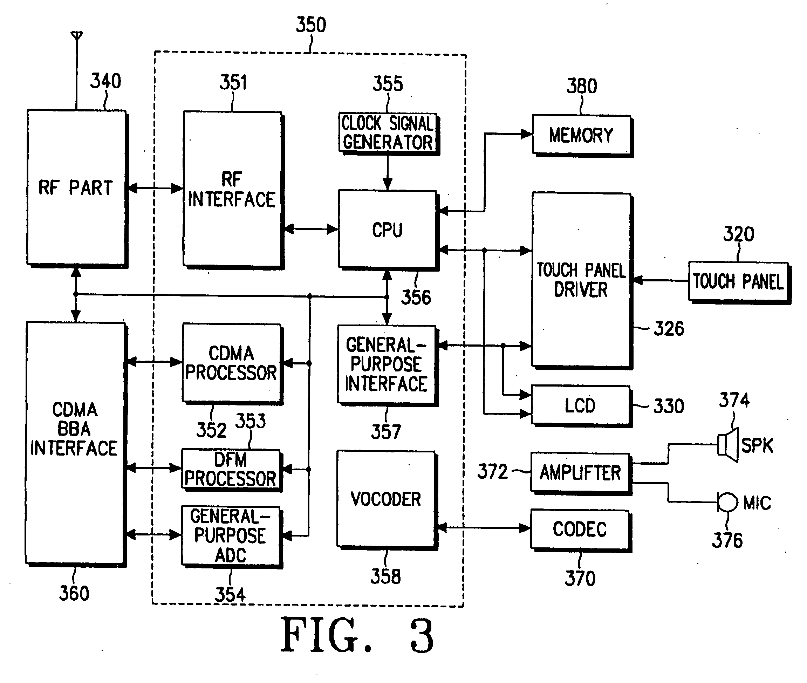

Referring to Fig. 3, a radio frequency (RF) part 340 is to transmit or receive a radio signal through an antenna. It includes a duplexer to separate transmission and receiving signals. A CDMA BBA (Based Analog Asic) interface 360 is directly connected with the modem 350 of the mobile communication terminal to match RF signal processing with the digital signal processing, filtering the signal from the RF part 340 to the modem 350, or converting the digital signal from the modem 350 into an analog signal delivered to the RF part 340. The CDMA BBA 360 comprises an A/D converter, D/A converter, LPF(FM/CDMA), frequency divider, voltage controlled oscillator (VCO), control circuit, PLL, mixer, etc. The modem 350 required for the CDMA digital cellular phone is usually "MSM" chip manufacture by Qualcomm, Co., U. S. A. The MSM chip includes a CPU 356 of '186 microprocessor, CDMA processor 352, DFM processor 353 for processing digital FM signals, Vocoder (358) for processing voice signals, RF interface 351 for controlling transmission level and received gain, clock signal generator 355 for generating a reference clock signal, general-purpose ADC 354 for converting analog signals to digital signals, general-purpose interface (GPI) 357 for interfacing the CPU 356 with peripheral devices such as key pad. The CPU 356 processes data read from and written into a memory 380, controlling the peripheral devices through the GPI 357. The CDMA processor 352 processes digital signals by CDMA(IS-95), and CDMA data concerning calculation of electric field strength, transceiver AGC circuit, CDMA transmission and receiving spectrum inversion, etc. It is an essential part of the CDMA digital cellular terminal. The DFM processor 353 interfaces with the CDMA BBA interface 360, separating the transmitting and receiving paths to process digital FM signals. The Vocoder 358 is obtained by QCELP Vocoding technology to process CDMA speech sound. It is connected with CODEC 370 to process the sound signals from a speaker 374 and a microphone 376. The GPI 357 is provided with 31 general-purpose input/output terminals GPIO to process data received from or transferred to the peripheral devices. The memory 380 communicates with the CPU 356, storing the program and data for operating the CDMA phone as well as a drive program for operating the character-recognition system. The character-recognition method is accomplished as shown in Fig. 2. The LCD 330 includes an internal buffer to store the data received from the CPU 356, displaying the stored data.

Touch panel 320 is a character input device for generating X/Y coordinate data and touch panel state data according to pressures exerted by a user. Its operational principle is to convert the pressures into resistance or capacitance values. Touch panel driver 326 converts the X/Y coordinate data and state data received from the touch panel 320, transferring the converted data through data bus to CPU 356 or the general-purpose input/output terminals of the GPI 357. To this end, the touch panel driver 326 includes an enable signal input terminal controlled by the CPU, an interrupt output terminal to inform of the operational state of the touch panel 320, data bus for transmitting data, a touch panel output terminal for generating the touch panel state signal, X/Y selection terminal for separately delivering X and Y coordinate data, power reset terminal for adjusting the power used by the touch panel 320, and bus high enable (BHE) terminal for controlling data transmission speed. In the present embodiment, the touch panel driver 326 is made of "TR88L803/804" chip manufactured by Tritech Microelectronics Co, U. S. A., but other similar chip may be used.

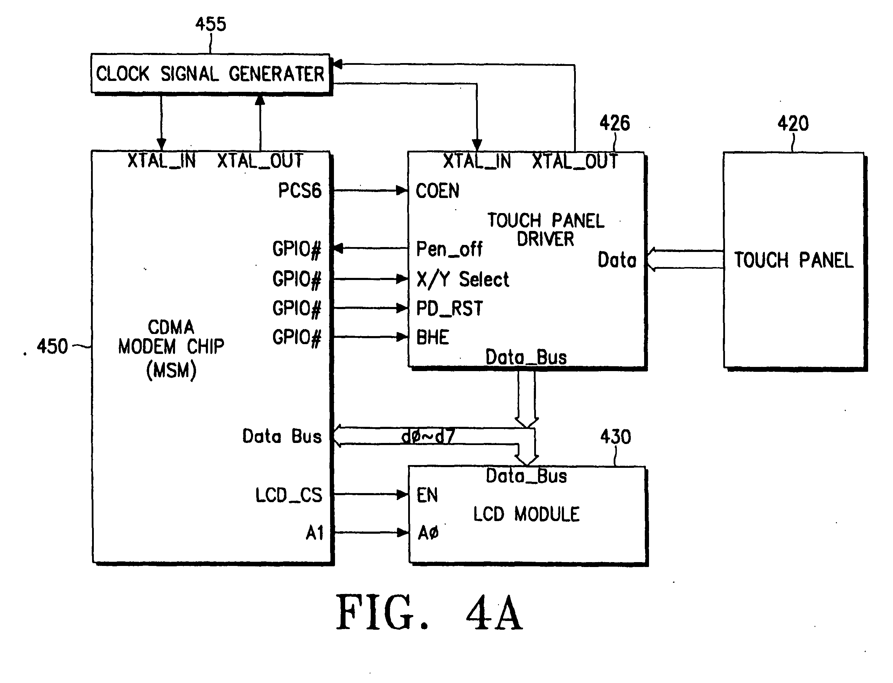

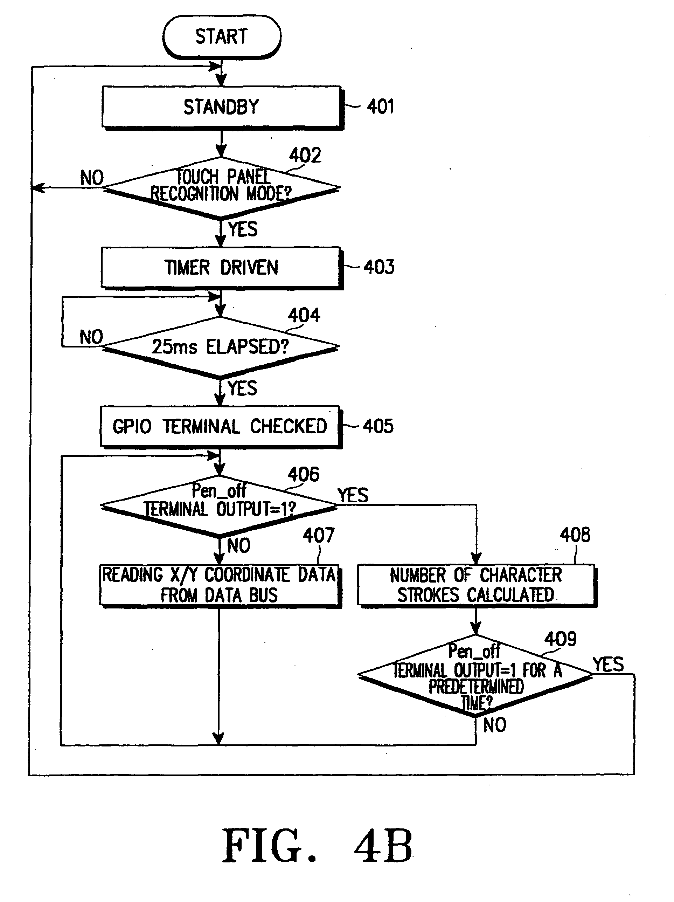

Referring to Figs. 4A and 4B, the modem chip of the mobile communication terminal is made of MSM chip, and the touch panel drive "TR88L804" chip. In the present embodiment, the touch panel interface is designed to operate by polling. The touch panel 420 converts a pressure trace made by a pen writing a character thereon into an analog voltage variation to represent X and Y coordinates transferred through a data line. The analog voltage variation is converted by the A/D converter of the touch panel driver 426 into digital X and Y coordinate data. The touch panel driver 426 includes a touch panel driver enable input terminal COEN, touch panel state output terminal Pen_off, data bus terminal Data_Bus of 8-bit transmission for transferring the coordinate data, X/Y coordinate selection terminal X/Y Select, power reset terminal PD_RST, and transmission speed control terminal BHE. On the other hand, the MSM chip 450 includes touch panel driver enable output terminal PCS6, a plurality of general-purpose I/O (input/output) terminals GPIO, data bus terminal Data_Bus, LCD enable output terminal LCD_CS, and address terminal A1.

In operation, the terminal X/Y Select makes it possible to transfer the X and Y coordinate data produced by the touch panel driver through the same data bus, controlled by the CPU of the MSM chip with a general-purpose I/O terminal GPIO connected thereto. The touch panel driver enable input terminal COEN is connected with the touch panel driver enable output terminal PCS6 of the MSM chip 450 to match its data bus with the data bus of the touch panel driver 426. Thus, if the CPU of the MSM chip detects the touch panel being driven, it activates the touch panel driver enable output terminal PCS6, connected with the data bus of the touch panel driver. The touch panel state output terminal Pen off is connected with a general-purpose terminal GPIO of the MSM chip 450 to inform the CPU of a character input being made through the touch panel, so that the CPU may activate the touch panel driver enable output terminal PCS6. If the terminal PCS6 is activated, the data bus of the CPU is matched with the data bus ofthe touch panel driver 426, receiving the X/Y coordinate data generated from the touch panel. The touch panel state output terminal Pen_off is used by polling to detect the touch panel state signal. The terminal Pen_off is connected with a general-purpose terminal GPIO of the MSM chip 450, which is polled by the CPU at predetermined intervals to detect the touch panel state signal in order to activate the terminal PCS6. The touch panel state signal represents the input state of the touch panel.

The power reset terminal PD_RST is connected with a general-purpose terminal GPIO of the MSM 450 to cut off the power when the touch panel 420 is not used, thereby minimizing the power consumption of the touch panel driver 426. This is to compensate for the power consumption caused by the touch panel 420 and the touch panel driver 426 added to the ordinary mobile communication terminal. The transmission speed control terminal BHE is connected with a general-purpose terminal GPIO of the MSM 450 to transfer data having higher resolution than ordinary 8-bit data generated from the touch panel. For example, if 10-bit data is transferred, the CPU firstly sets the terminal BHE at high to initially transfer 8-bit data, and then at low to secondly transfer 2-bit data. This results in the touch panel interface to adjust resolution as desired.

Referring to Fig. 4A, the LCD module 430 is to display the data required for operating the communication terminal together with the character written by a user through the touch panel, having an enable terminal EN, address terminal and data bus for receiving displayed data such as character data. The enable terminal EN is connected with the LCD enable output terminal LCD_CS of the MSM 450, and the address terminal A0 with the address terminal A1 of the MSM 450 to operate the LCD module. The data bus of the LCD module 430 is connected with the data bus of the MSM 450, commonly occupied by the touch panel driver. This saves the limited data buses of the MSM chip. When the CPU activates the LCD enable output terminal LCD_CS to enable the LCD module 430 to display the data generated from the CPU. The displayed data is read from the memory provided in the mobile communication terminal. As shown in Fig. 4A, a clock signal generator 455 consisting of a crystal is provided to generate a reference clock signal for the MSM 450. In addition, the reference clock signal of the clock signal generator 455 is frequency-divided into submultiples to generate anotherreference clock signal for the touch panel driver 420. This results in no additional clock signal generator to drive the touch panel driver 420.

The touch panel interface according to the first embodiment of the present invention, as shown in Fig. 4A, is operated by polling following the steps as shown in Fig. 4B. If touch panel recognition mode is started by an input in step 402 from standby state in step 401, the CPU of the MSM 450 drives in step 404 a timer 403 to measure a predetermined time interval of 25ms, which time interval is an experimental value to properly detect a character data written by a user on the touch panel. If the predetermined time interval has elapsed, it checks in step 406 general-purpose I/O terminal GPIO connected with the touch panel state output terminal of the touch panel driver 426 to detect a character data input. Detecting logical value of "1" from the terminal Pen_off to indicate no input applied to the touch panel 420 in step 406, the number of the strokes of the character input is calculated in step 408. In the present embodiment, TR88L804 chip for the touch panel driver is adjusted for the terminal Pen_off to output logical value of 0 or 1 according as the touch panel is applied with an input or no. Namely, the output of the terminal Pen_off serves as the touch panel state signal to represent whether a character data is inputted through the touch panel or not. Then, in step 409, it is determined whether the output of the terminal Pen_off is detected as logical value of 1 or 0 for a predetermined time. If logical value of 1 is detected to indicate completion of the input of a character, the process returns to step 401. On the other hand, if not detecting the output of the terminal Pen_pff as "1" in step 406, it indicates that the present input through the touch panel is not completed, and therefore, the process goes to step 407 to read X/Y coordinate data from the data bus, then returning to step 406. Namely, detecting an input through the touch panel 420, the CPU of the MSM 450 activates the touch panel driver enable output terminal PCS6 to work the touch panel driver 426 to match the data bus of the MSM 450 with the data bus of the touch panel driver 426, so that the X/Y coordinate data from the touch panel driver is transferred to the CPU. Then, the CPU analyzes the X/Y coordinate data and the touch panel state data received through the terminal GPIO connected with the terminal Pen_off to read corresponding character code from a character code storage provided in the communication terminal. The character code is transferred to the LCD module 430 which is enabled by activation of the terminal LCD_CS . In this case, the data bus is commonly occupied by the touch panel driver 426 and the LCD module 430, but data collision is prevented between them because they are respectively input and output means with the terminals PCS6 and LCD_CS being driven oppositely. In addition, the LCD module 430 is provided with a data storage buffer to continuously transfer the data previously displayed even if the data bus is matched with the touch panel driver 426 during the displaying.

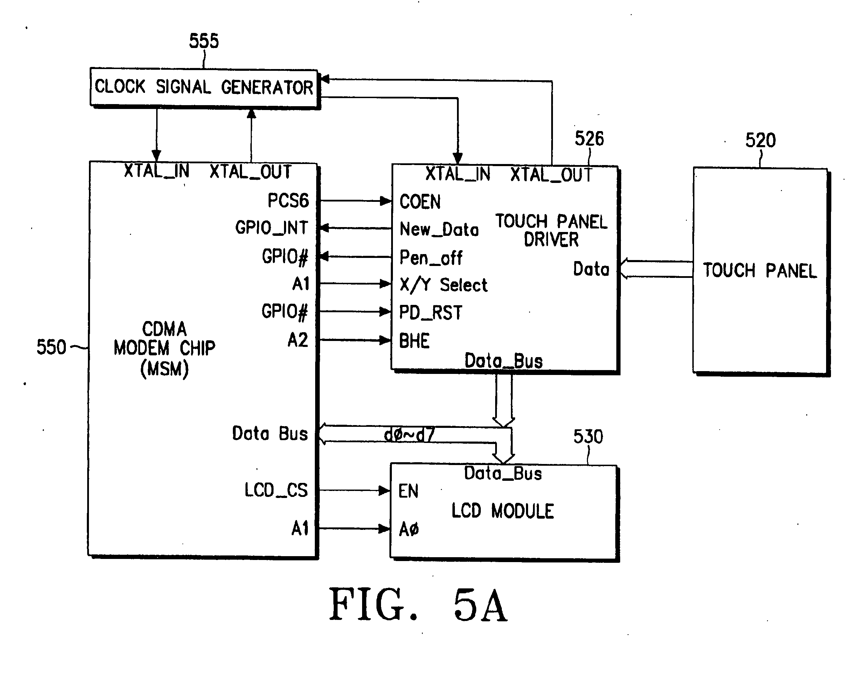

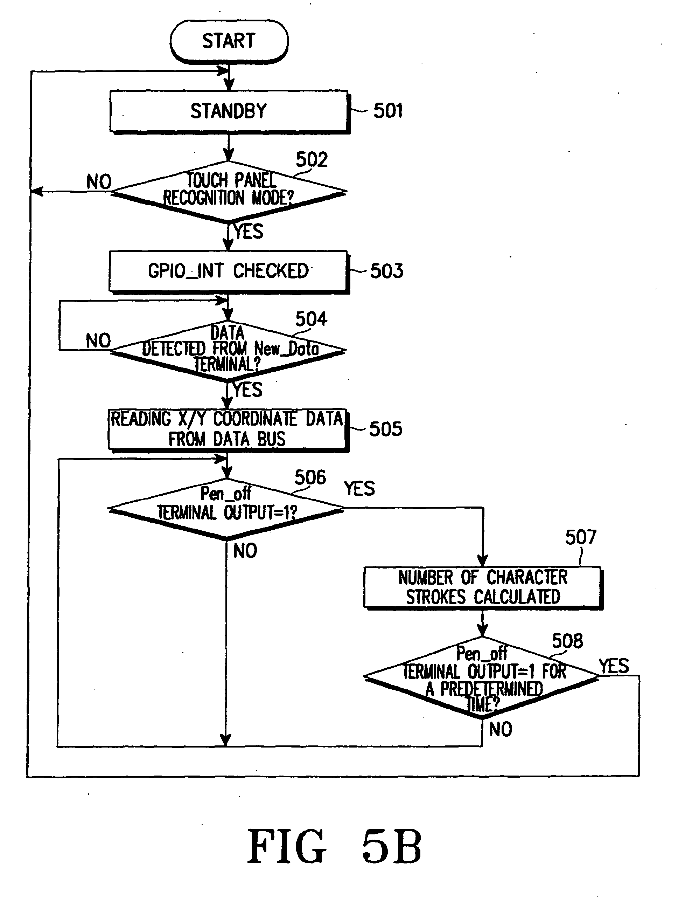

Describing the second embodiment of the character-recognition system with reference to Figs. 5A and 5b, which also uses the MSM chip as the modem chip and "TR88L804" as the touch panel driver, it is required to note that the touch panel state signal is checked by interruption in stead of polling used in the previous embodiment. To this end, the touch panel driver 526 is provided with a separate interrupt output terminal New_Data connected with a general-purpose interrupt input terminal GPIO _INT in order to inform the modem chip 550 of a new data input through the touch panel 520. The other terminals have the same functions as those of Fig. 4A. The operation of the touch panel interface of the present embodiment is described as follows:

Referring to Fig. 5B, if touch panel recognition mode is started by an input in step 502 from standby state in step 501, the CPU of the MSM 550 checks through the general-purpose terminal GPIO_INT connected with the interrupt output terminal New_Data of the touch panel driver 526 in step 503. If the CPU detects a data input from the terminal GPIO_INT connected with the terminal New_Data in step 504, it reads X/Y coordinate data from the data bus Data_Bus in step 505, or otherwise returning to step 503. Namely, as the touch panel 520 is applied with an input, the X/Y coordinate data is read. Not detecting logical value of "1" from the terminal Pen_off to indicate data input continued through the touch panel 520 in step 506, the process returns to step 505. However, detecting logical value of 1 in step 506 to indicate completion of the character input, the number of the strokes of the character input is calculated in step 507. Subsequently detecting logical value of 1 from the terminal Pen_off for a predetermined time in step 508, the process returns to step 501. Or otherwise, the step 506 is repeated.

As described in the first and second embodiments, the touch panel recognition interface may be achieved by interrupt or polling means to check the touch panel input. The interrupt means is to drive the touch panel driver whenever the touch panel is pressed by a character input while the polling means is to periodically check the touch panel state to drive the touch panel driver.

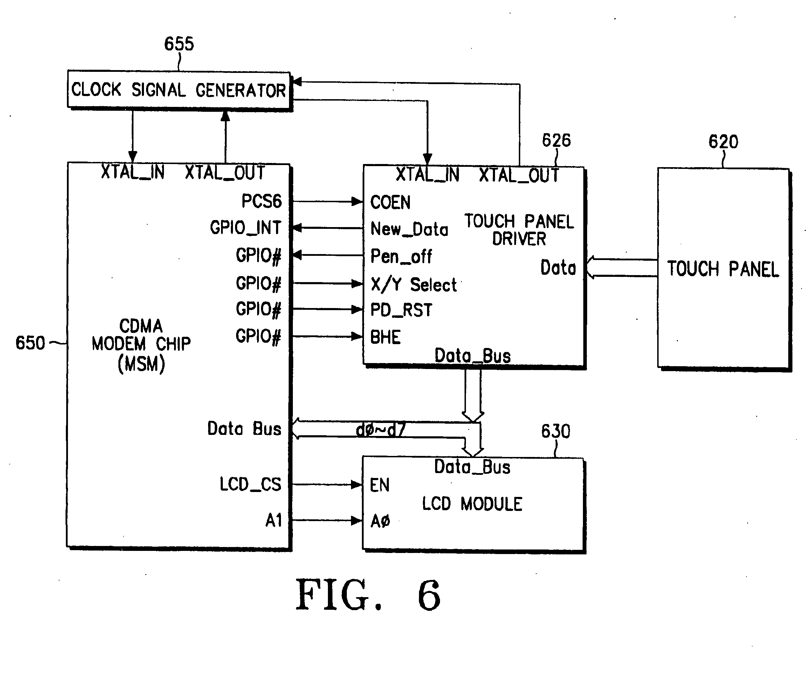

Describing the third embodiment with reference to Fig. 6, there are shown MSM 650, touch panel driver 626, touch panel 620, LCD module 630 and clock signal generator 655, which are the same as those of Figs. 4A and 5A. However, the terminal X/Y Select of the touch panel driver 626 is connected with an address terminal A1 in stead of GPIO. This is because the MSM chip has a limited number of general-purpose I/O terminals GPIO, and therefore, there may occur a case in which GPIO can not be used for the terminal X/Y Select. Likewise, the terminal BHE is connected with an address terminal A2 in stead of GPIO. In addition, although not shown in Figs. 4A, 5A and 6, the touch panel state output terminal New_Data may be connected with the key sense terminal provided in the MSM chip, which key sense terminal is to sense the state of the key input.

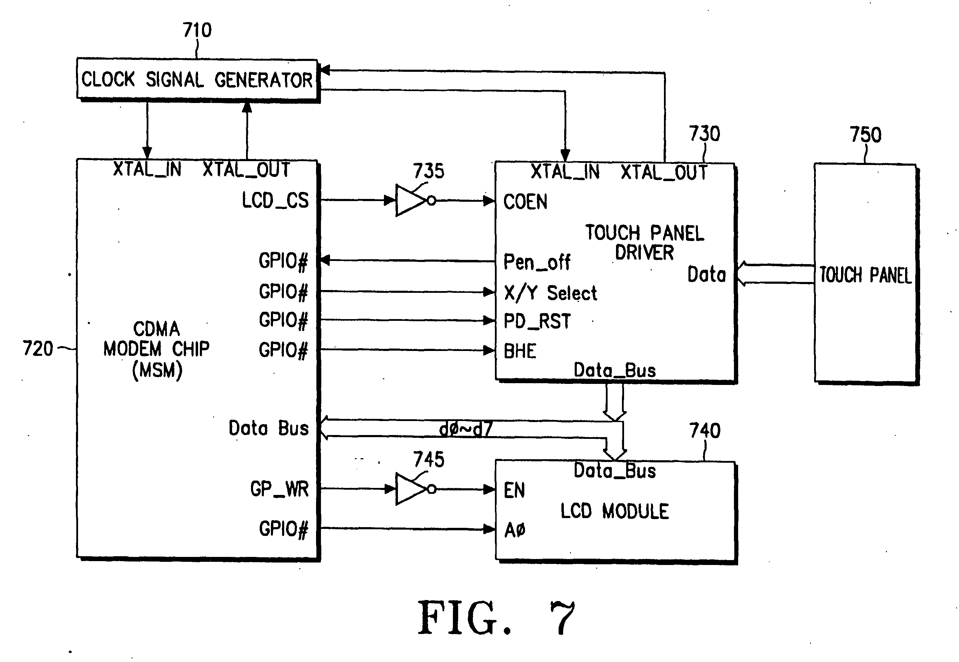

Figs. 7, 8 and 9 illustrate the fourth, fifth and sixth embodiments of the character-recognition system. These are to provide means for interfacing the character-recognition system when other interface devices use the display selection terminal LCD_CS, chip selection terminal PCS6, RAM selection terminal RAM_CS, ROM selection terminal ROM_CS, EEPROM selection terminal EEPROM_CS, etc. of the MSM. For example, the chip selection terminal PCS6 is used for another device, another terminal is required for interfacing the touch panel driver. In the present embodiments, the touch panel driver consists of TR88L803/804CS manufactured by TriTec Microelectronics Co., and the display module UC-082907-FLHTX-Amanufacture by Korean Samsung Electron Tube Co. Of course, the LCD modules made by other manufacturers may be used provided that they work in the same way. The LCD module is provided with an activation input enable terminal EN, address terminal, and command/display data bus. It also has an internal buffer to store data received through the data bus connected with the CPU. The fourth, fifth and sixth embodiments of the character-recognition system are described as follows:

Referring to Fig. 7, the touch panel driver enable input terminal COEN of the touch panel driver 730 is connected with the terminal LCD_CS of the modem chip 720 in stead of the terminal PCS6 used for another device. The touch panel 750 converts the X and Y coordinate values representing a pressure trace made by a character written thereon into analog voltage variations, which are converted by the A/D converter provided in the touch panel driver 730 to corresponding digital coordinate data. The touch panel driver 730 includes the touch panel enable input terminal COEN, touch panel state output terminal Pen_off, 8-bit data bus terminal Data_Bus to transfer the coordinate data, X/Y selection terminal X/Y Select, power reset terminal PD_RST, and transmission speed control terminal BHE, as shown in the previous embodiments. The MSM chip 720 includes a general purpose write output terminal GP_WR, at least two general-purpose I/O terminals, data bus terminal Data_ Bus, and LCD module selection terminal LCD_CS for selecting the LCD module 140. The terminal X/Y Select is connected with a general-purpose I/O terminal GPIO of the MSM 720 to make it possible to read the X and Y coordinate data produced by the touch panel driver from the same data bus. The terminal COEN is connected with a first selection circuit 735 consisting of the terminal LCD_CS of the MSM 720 and an inverter in order to match the data bus of the MSM 720 with the touch panel driver 730. Namely, detecting a signal input through the touch panel, the CPU of the MSM 720 activates the terminal LCD_CS to drive the touch panel driver 730 through the terminal COEN, matching the data bus with the touch panel driver 730. The terminal Pen_off is connected with a general-purpose I/O terminal GPIO of the MSM 720 to inform the CPU of the data input through the touch panel 750. The CPU activates the terminal LCD_CS in response to the output of the terminal Pen_off. Then, the X/Y coordinate data and touch panel state data are inputted to the CPU.

In the present embodiment, the terminal Pen_off is to drive the touch panel driver 730 by polling. The CPU checks the terminal GPIO at predetermined time intervals to detect the output of the terminal Pen_off to activate the terminal LCD_CS. The terminal PD_RST is connected with a general-purpose I/O terminal of the MSM 720 to cut off the power consumption of the touch panel driver 730 when the touch panel 750 is not used. This compensates for the power consumption caused by the touch panel 750 and touch panel driver 730 added to the ordinary mobile communication terminal according to the present invention. The terminal BHE is connected with a general-purpose GPIO of the MSM 720 to transfer data having higher resolution than the ordinary 8-bit data from the touch panel 750. For example, in order to transfer 10-bit data, the CPU sets the terminal BHE at high to initially transfer 8-bit data, and then at low to secondly transfer the remaining 2-bit data. This enables the character-recognition system to adjust resolution as desired.

Meanwhile, the LCD enable input terminal EN is connected with the MSM 720 through a second inverting circuit 745 consisting of the general-purpose write terminal GP_WR of the MSM and an inverter because the terminal LCD_CS of the MSM is used to work the touch panel driver. This is possible because the LCD module 740 is exclusively used as an output device. However, since the terminal GP_WR only supports a single address, it can not serve to separately transfer both command and display data to the LCD module, which is required to display both data. Namely, the LCD can not be normally interfaced only with the terminal GP_WR. In order to resolve this problem, a general-purpose I/O terminal of the MSM is connected with the address terminal A0 of the LCD module 740. The data bus of the LCD module 740 is matched with the data bus of the MSM 720, commonly occupied by the touch panel driver 730. This saves the resources of the mobile communication terminal. In operation, when the CPU activates the terminal GP_WR to send address data through the address output terminal GPIO, the LCD module 740 is enabled to display the command and display data received from the CPU through the data bus. The clock signal generator 755 usually consisting of a crystal generates a reference clock signal for the MSM 720. In the present embodiment, the reference clock signal is frequency-divided into submultiples to generate another reference clock signal used for the touch panel driver 720. This eliminates an additional clock signal generator for driving the touch panel driver 730.

Describing the operation of the character-recognition system according to the present embodiment, detecting a character input through the touch panel 750, the CPU of the MSM 720 activates the terminal LCD_CS through the first selection circuit 735 to drive the touch panel driver 730, so that the data bus of the MSM 720 is matched with the data bus of the touch panel 730 to generate the X/Y coordinate data and touch panel state data transferred to the CPU. The CPU analyzes them to read from the character code storage the character code corresponding to the X/Y coordinate data and state data. Then, the CPU activates the terminals GP_WR and GPIO to transfer the command/display data to the LCD module 740. Namely, the output of the activated terminal GP_WR is inverted by the second selection circuit 745 to enable the terminal EN of the LCD module 740, and the output of the activated terminal GPIO the address terminal A0 thereof. Although the data bus is commonly occupied by the touch panel driver 730 and LCD module 740, the data collision is prevented because of both terminals LCD_CS and GP_WR oppositely activated. This is due to the fact that the touch panel 750 is the input means and the LCD module the output means. Besides, the LCD module 740 usually includes a data storage buffer to continuously display the present data even if the data bus is matched with the touch panel driver 730.

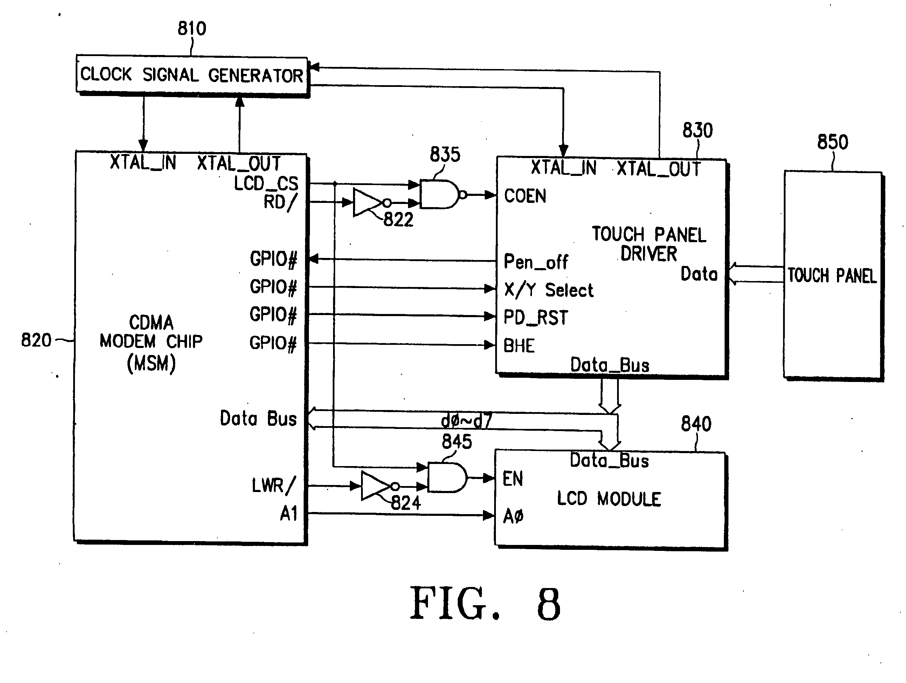

Describing the fifth embodiment of the present invention with reference to Fig. 8, the character-recognition system includes MSM 820, touch panel driver 830, touch panel 850, LCD module 840, and clock signal generator 810 as in the case of Fig. 7. However, the touch panel driver enable input terminal COEN of the touch panel driver 830 is connected with a NAND gate 835 for NAND-gating the output signal of the read command output terminal RD/inverted by an inverter 822 and the output signal of the terminal LCD_CS. In the present embodiment, the inverter 822 and the NAND gate 835 constitute a first selection circuit to select the touch panel driver. Of course, the first selection circuit may be made of other circuits. On the other hand, the terminal EN of the LCD module 830 is connected with an AND gate 845 for AND- gating the output signal of the write command output terminal LWR/of the MSM inverted by an inverter 824 and the output signal of the terminal LCD-CS. The inverter 824 and the AND gate 845 constitute a second selection circuit to select the LCD module 840. This is possible due to the fact that the touch panel driver 830 serves only as the input means, and the LCD module 840 as the output means to display data. Namely, when the terminal LCD_CS is activated, the touch panel driver 830 may be driven by activating the terminal RD/, and the LCD module 840 by activating the terminal LWR/, so that the data bus may be matched with the touch panel driver 830 or the LCD module 840. In the present embodiment, the terminal LCD_CS is used to drive both touch panel driver and LCD module in stead of using the terminal GP_WR as shown in Fig. 7.

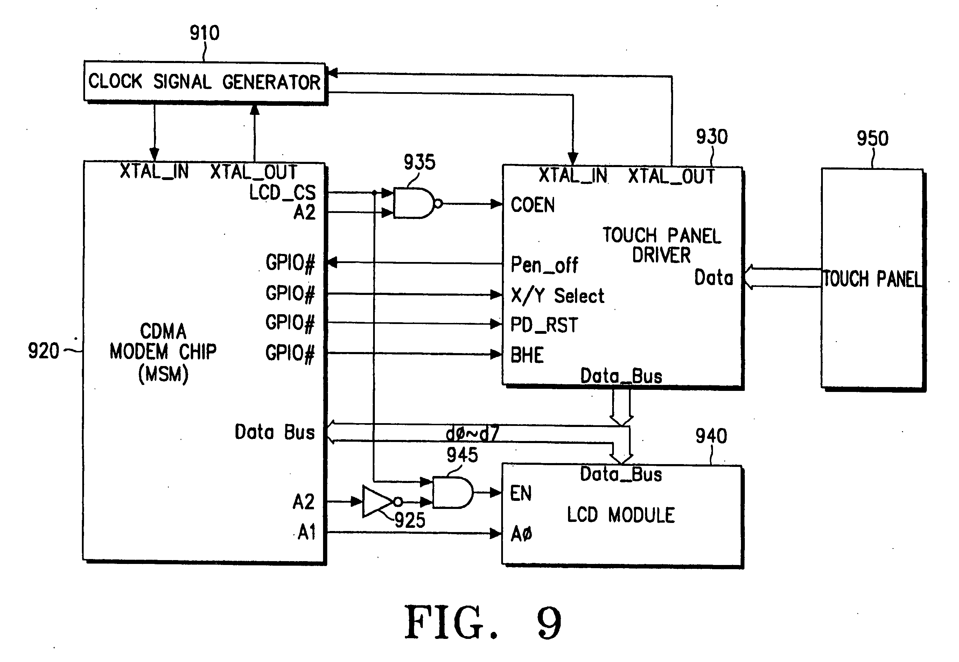

Similarly, the sixth embodiment of the present invention as shown in Fig. 9 includes MSM 920, touch panel driver 930, touch panel 950, LCD module 940, and clock signal generator 910. However, the touch panel driver enable input terminal COEN of the touch panel driver 930 is connected with a NAND gate 935 for NAND-gating the output signal of the terminal LCD_CS and the address terminal A2 of the MSM 920. The NAND gate 935 is called the third selection circuit in the present embodiment. On the other hand, the terminal EN of the LCD module 940 is connected with an AND gate for AND-gating the output signal of the address terminal A2 inverted by the inverter 925 and the output signal of the terminal LCD_CS. The inverter 925 and the AND gate 945 constitute the fourth selection circuit. In the present embodiment, considering four addresses allowed for the terminal LCD_CS of the MSM 920, a certain address bus A2 is used for the distinction signal to selectively drive the touch panel driver 930 and the LCD module 940, so that the data bus of the MSM 920 may be matched with the LCD module 940 or the touch panel driver 930. Also in the present embodiment is not used the general-purpose write output terminal GP_WR of the MSM for interfacing the touch panel and display.

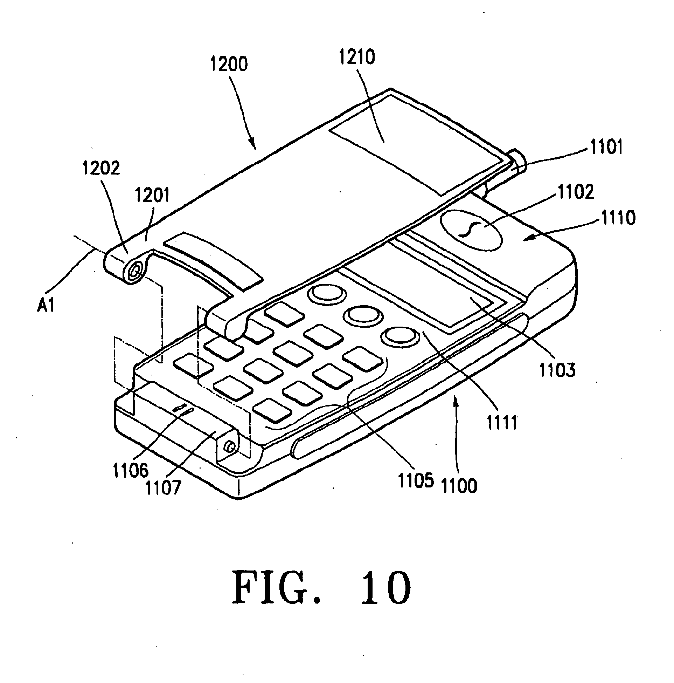

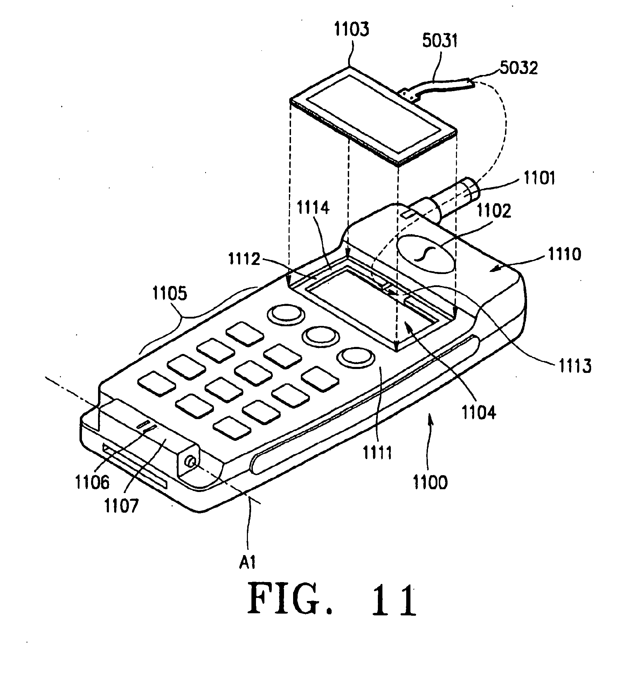

In order to install the character-recognition system in the conventional mobile radio phone, various design factors must be considered including the position and size of the touch panel as well as means for attaching it to the housing of the mobile phone. Additionally required is means for protecting the touch panel from external force and maintaining it. Referring to Figs. 10 and 11, there is shown a mobile cellular phone including a housing, key pad, touch panel, speaker, microphone, etc. As shown in Fig. 10, the flip-type mobile communication terminal comprises a housing 1110, a flip cover 1200, and a hinge structure 1106 for mechanically connecting the housing 1110 and flip cover 1200. Mounted on one side of the upper part of the housing is an antenna unit 1101. Below the antenna unit 1101 is mounted an ear piece 1102 including a speaker. The LCD module (see Fig. 11) is mounted below the ear piece 1102, and the touch panel 1113 laid thereon. Below the touch panel 1113 is formed the key pad 1105, below which is mounted the hinge structure 1107 containing the microphone 1106. The flip cover 1200 is turned about the central axis A1 of the hinge structure to cover the key pad 1105 and touch screen 1103. The flip cover 1200 includes a pair of necks 1201 on both sides of its base, and a hinge knuckle 1202 formed on the end of each neck. In addition, a plastic transparent window 1210 is formed in the flip cover 1200 so as to allow externally viewing of the touch screen 1103 when the flip cover closes the front surface of the phone body 1100. The transparent window 1210 protects the touch panel from external environment, allowing externally viewing of the data displayed on the touch panel 1103. The front surface 1111 of the housing 1110 is provided with a rectangular recess for accommodating the touch panel 1103. The touch panel 1103 is bonded onto the bottom 1112. The recess has two apertures, one 1114 of which is to provide a slight gap between the LCD module 1104 and the other 1113 to pass a flexible printed circuit 5031 for connecting the touch panel 1103 with the internal memory board. Namely, the conventional LCD transparent window is replaced by the touch panel 1103, and the aperture 1113 added to pass the flexible printed circuit 5031. The touch panel 1103 is mounted to face the LCD 1104 module with a slight gap therebetween. The flexible printed circuit 5031 consists of four conductor lines to define two dimensional coordinates of a character input.

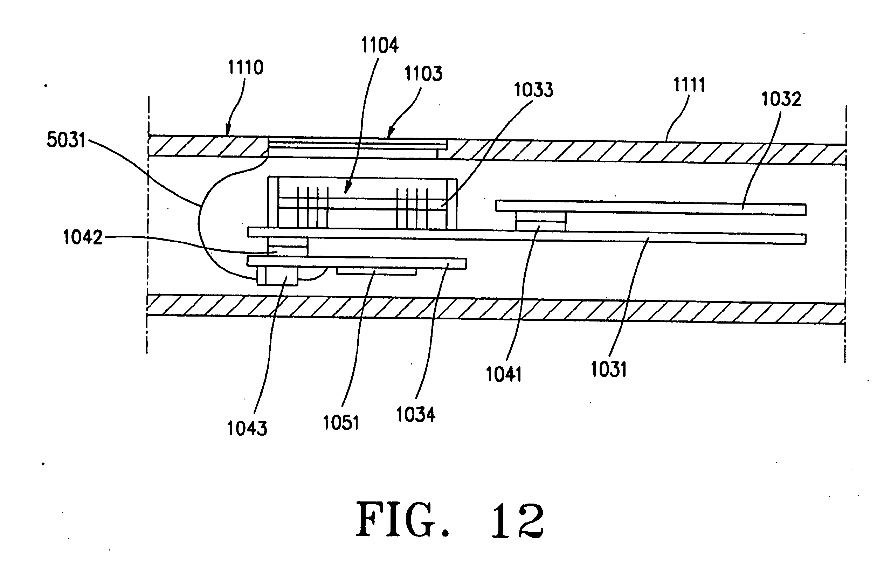

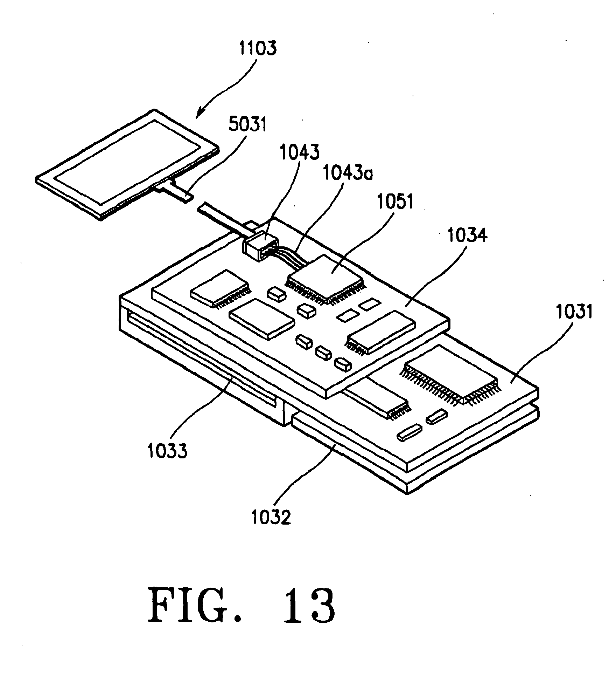

Referring to Figs. 12 and 13, the mobile phone comprises four circuit boards. Mounted on the main board 1031 are the keypad board 1032 electrically connected via male-female connector 1041, the LCD board 1033 by soldering, and the memory board 1031 by male-female connector 1042. The flexible (FPC) extended from the touch panel 1103 is electrically connected to the connector 1043 detachably attached to the memory board 1034. The connector 1043 is electrically connected with the touch panel driver 1051 via four wires 1043a. Of course, the FPC 5031 may be directly connected with the LCD board 1033 and keypad board 1032 in stead of the memory board 1034.

It is also preferable to directly connect the FPC with the main board 1031. In this case, the four film-type conductor lines of the touch panel are directly soldered to the main board at a suitable region around the speaker. Or otherwise, a detachable connector may be exclusively used for such connection. Thus, when the touch panel is contacted by a finger or stylus, two dimensional coordinate data is generated transferred through the FPC to the main board, where it is converted into digital data processed by the MSM.

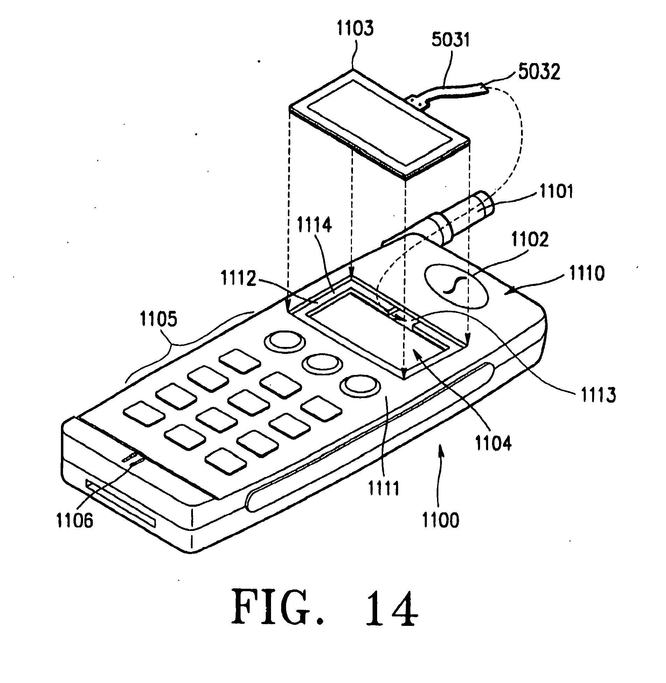

Fig. 14 illustrates the character-recognition system applied to the ordinary bar-type mobile phone. Likewise, the mobile phone comprises a housing 1110 for enclosing a main board, an antenna 1101 mounted in one side of the upper part of the housing, an ear piece 1102 provided in the upper part of the housing, an LCD module 1104 installed in the inside ofthe housing below the ear piece, a touch panel 1103 laid over said LCD module 1104, a key pad 1105 mounted below the touch panel, and a microphone 1106 installed below the key pad. The touch panel 1103 is electrically connected through FPC 5031 with the main board, and exposed through the front surface of the housing.

## Claims

1. A mobile communication terminal having a touch panel, comprising:
a housing (1110) having an upper part;
an earpiece (1102) provided in said upper part of said housing;
a LCD module (1104) installed inside said housing (1110) below said ear piece (1102);
a key pad (1105) mounted below said touch panel including a plurality of keys;
a touch panel (1103) arranged over said LCD module (1104), electrically connected through a flexible printed circuit (5031) and exposed through the front surface of said housing; and
a microphone (1106) installed below said key pad,
the housing (1110) further having an aperture (1113) through which the flexible printed circuit (5031) of the touch panel (1103) passes, in order to connect the flexible printed circuit (5031) of the touch panel with a main board (1031).

2. The mobile communication terminal as defined in claim 1, further comprising:
a hinge structure (1106) for mechanically connecting said housing (1110); and
a flip cover (1200) having a transparent window (1210) so as to protectively allow external view of said touch panel when said flip cover is turned on said hinge structure into the closed position.

3. The mobile communication terminal as defined in claim 1 or 2, wherein the flexible printed circuit (5031) is connected with the main board (1031) by a detachable connector (1043).

## Patentansprüche

1. Mobilkommunikations-Endgerät mit einem Berührungspaneel, wobei das Endgerät umfasst:
ein Gehäuse (1110) mit einem oberen Teil,
ein Ohrteil (1102), das in dem oberen Teil des Gehäuses vorgesehen ist,
ein LCD-Modul (1104), das in dem Gehäuse (1110) unterhalb des Ohrteils (1102) installiert ist,
ein Tastenfeld (1105), das unterhalb des Berührungspaneels montiert ist und eine Vielzahl von Tasten umfasst,
ein Berührungspaneel (1103), das über dem LCD-Modul (1104) angeordnet ist, elektrisch über eine flexible gedruckte Schaltung (5031) verbunden ist und an der Vorderseite des Gehäuses freiliegt, und
ein Mikrofon (1106), das unterhalb des Tastenfelds installiert ist,
wobei das Gehäuse (1110) weiterhin eine Öffnung (1113) aufweist, durch die die flexible gedruckte Schaltung (5031) des Berührungspaneels (1103) hindurchgeht, um die flexible gedruckte Schaltung (5031) des Berührungspaneels mit einer Hauptplatine (1031) zu verbinden.

2. Mobilkommunikations-Endgerät nach Anspruch 1, weiterhin **gekennzeichnet durch**:
eine Gelenkstruktur (1106) für die mechanische Verbindung des Gehäuses (1110), und
einen Klappdeckel (1200) mit einem transparenten Fenster (1210), der schützend eine Sicht von außen auf das Berührungspaneel gestattet, wenn er an der Gelenkstruktur zu der geschlossenen Position gedreht wird.

3. Mobilkommunikations-Endgerät nach Anspruch 1 oder 2, **dadurch gekennzeichnet, dass** die flexible gedruckte Schaltung (5031) über einen entfernbaren Stecker (1043) mit der Hauptplatine (1031) verbunden ist.

## Revendications

1. Terminal de communication mobile ayant un panneau tactile, comportant :
un boîtier (1110) ayant une partie supérieure ;
un écouteur (1102) situé dans ladite partie supérieure dudit boîtier ;
un module (1104) d'affichage à cristaux liquides installé à l'intérieur dudit boîtier (1110) en dessous dudit écouteur (1102) ;
un clavier (1105) monté en dessous dudit panneau tactile et comprenant plusieurs touches ;
un panneau tactile (1103) agencé au-dessus dudit module d'affichage à cristaux liquides (1104), connecté électriquement par l'intermédiaire d'un circuit imprimé souple (5031) et exposé à travers la surface avant dudit boîtier ; et
un microphone (1106) installé en dessous dudit clavier,
le boîtier (1110) ayant en outre une ouverture (1113) à travers laquelle le circuit imprimé souple (5031) du panneau tactile (1103) passe pour connecter le circuit imprimé souple (5031) du panneau tactile à une carte principale (1031).

2. Terminal de communication mobile tel que défini dans la revendication 1, comportant en outre :
une structure de charnière (1106) pour relier mécaniquement ledit boîtier (1110) ; et
un capot à clapet (1200) ayant une fenêtre transparente (1210) afin de permettre de façon protégée une observation extérieure dudit panneau tactile lorsque ledit capot à clapet est tourné dans la position fermée sur ladite structure de charnière.

3. Terminal de communication mobile tel que défini dans la revendication 1 ou 2, dans lequel le circuit imprimé souple (5031) est connecté à la carte principale (1031) par un connecteur amovible (1043).
